# EUROPÄISCHE PATENTSCHRIFT

(11) **EP 3 112 083 B1**
(45) Veröffentlichungstag und Bekanntmachung des Hinweises auf die Patenterteilung: **24.02.2021**
(21) Anmeldenummer: 15175283.9
(22) Anmeldetag: 03.07.2015
(51) Int. Cl.: B23Q 1/01, B23Q 5/38, F16H 55/28

(54) **PORTALANORDNUNG EINER WERKZEUGMASCHINE UND WERKZEUGMASCHINE MIT EINER DERARTIGEN PORTALANORDNUNG**
PORTAL ASSEMBLY OF A MACHINE TOOL AND MACHINE TOOL WITH SUCH A PORTAL ASSEMBLY
SYSTÈME DE PORTIQUE D'UNE MACHINE-OUTIL ET MACHINE-OUTIL AVEC UN TEL SYSTÈME DE PORTIQUE

(43) Veröffentlichungstag der Anmeldung: 04.01.2017
(73) Patentinhaber: TRUMPF Werkzeugmaschinen GmbH + Co. KG, 71254 Ditzingen (DE)
(72) Erfinder: Knobel, Carsten, 02681 Wilthen (DE); Harnisch, Gunter, 01936 Königsbrück (DE); Steinhart, Gerhard, CH-8890 Flums (CH); Schärer, Andrea, CH-7214 Grüsch (CH); Wowtscherk, Markus, 01920 Ralbitz-Rosenthal / OT Schönau (DE); Schmauder, Frank, 72555 Metzingen (DE); Körner, Axel, 70563 Stuttgart (DE); Nieding, Philipp, Dr., 70469 Stuttgart (DE)
(74) Vertreter: Kohler Schmid Möbus Patentanwälte

(56) Entgegenhaltungen:
- EP-A1- 2 666 583
- EP-A2- 1 336 448
- CN-A- 101 920 417
- CN-U- 202 510 664
- CN-U- 202 790 435
- DE-A1-102004 007 448
- DE-B3-102014 002 495
- US-A- 4 550 626
- US-A1- 2012 116 571

## Beschreibung

Die Erfindung betrifft eine Portalanordnung einer Werkzeugmaschine,
- mit einem Portalträger zur Führung einer Funktionseinheit der Werkzeugmaschine in einer Längsrichtung des Portalträgers,
- mit einer Antriebsvorrichtung, mittels derer der Portalträger in einer senkrecht zu der Längsrichtung des Portalträgers verlaufenden Portalbewegungsrichtung angetrieben bewegbar ist und die einen Antriebsmotor sowie ein Antriebsrad umfasst, welches mit dem in der Portalbewegungsrichtung angetrieben bewegten Portalträger bewegungsverbunden und mittels des Antriebsmotors um eine Radachse antreibbar ist, die senkrecht zu der Portalbewegungsrichtung verläuft, wobei dem Antriebsrad der Antriebsvorrichtung eine ortsfeste und in der Portalbewegungsrichtung verlaufende Antriebsstange der Antriebsvorrichtung zugeordnet ist, welche dem Antriebsrad senkrecht zu der Radachse benachbart ist und mit welcher das Antriebsrad zur Bewegung des Portalträgers in der Portalbewegungsrichtung zusammenwirkt und wobei das Antriebsrad senkrecht zu der Radachse relativ zu der Antriebsstange zustellbar ist,
- mit einer Führungsvorrichtung, mittels derer der in der Portalbewegungsrichtung angetrieben bewegte Portalträger in der Portalbewegungsrichtung geführt ist und die eine portalträgerseitige Führungseinheit umfasst, welche mit dem in der Portalbewegungsrichtung angetrieben bewegten Portalträger bewegungsverbunden ist und welcher eine in der Portalbewegungsrichtung verlaufende ortsfeste Führungseinheit der Führungsvorrichtung zugeordnet ist,
- wobei das Antriebsrad der Antriebsvorrichtung senkrecht zu der Radachse relativ zu der Antriebsstange zustellbar ist, indem das Antriebsrad an einem Antriebsradträger vorgesehen ist, der mit dem in der Portalbewegungsrichtung angetrieben bewegten Portalträger bewegungsverbunden und der an der portalträgerseitigen Führungseinheit der Führungsvorrichtung relativ zu dieser senkrecht zu der Radachse des Antriebsrads zustellbar gelagert ist und
- wobei die portalträgerseitige Führungseinheit der Führungsvorrichtung zwei in der Portalbewegungsrichtung gegeneinander versetzte portalträgerseitige Führungselemente aufweist.

Die Erfindung betrifft des Weiteren eine Werkzeugmaschine zum Bearbeiten von Werkstücken, insbesondere von Blechen, mit einem Maschinengestell und einer Portalanordnung der vorstehenden Art, an deren Portalträger eine Funktionseinheit der Werkzeugmaschine in einer Längsrichtung des Portalträgers geführt ist, wobei der Portalträger an dem Maschinengestell senkrecht zu der Längsrichtung des Portalträgers in einer Portalbewegungsrichtung angetrieben bewegbar ist.

Gattungsgemäßer Stand der Technik ist offenbart in US 2012/0116571 A1. Dieses Dokument offenbart eine Werkzeugmaschine zur schneidenden Metallbearbeitung mit einer Portalanordnung, die einen Portalträger und zwei durch den Portalträger miteinander verbundene Portalsäulen aufweist. Mit den Portalsäulen ist die Portalanordnung an jeweils einer ortsfesten Führungsschiene in deren Längsrichtung geführt. Zu diesem Zweck ist jede der Portalsäulen mittels einer portalträgerseitigen Führungseinheit an zwei in der Bewegungsrichtung der Portalanordnung gegeneinander versetzten Stellen an der jeweiligen Führungsschiene gelagert. Zur Bewegung der Portalanordnung längs der Führungsschienen dient ein Zahnstangenantrieb mit einem Antriebsmotor an jeder der Portalsäulen. Die Antriebsmotoren treiben jeweils ein Antriebszahnrad an, das mit einer in der Bewegungsrichtung der Portalanordnung verlaufenden Zahnstange kämmt. Jeder der Antriebsmotoren ist gemeinsam mit seinem Antriebszahnrad an einem Träger montiert, der seinerseits an der jeweiligen Portalsäule senkrecht zu der betreffenden Zahnstange linear beweglich geführt ist. Zur Führung des Trägers dienen dabei zwei mit der Portalsäule verbundene Halter. Mit der linearen Beweglichkeit relativ zu den Haltern geht eine lineare Beweglichkeit des Trägers relativ zu der betreffenden Portalsäule und relativ zu der an der Portalsäule vorgesehenen portalträgerseitigen Führungseinheit einher. Mittels einer Schraube in ihrer Vorspannung einstellbare Federn bewirken, dass die Träger und das jeweilige Antriebszahnrad in horizontaler Richtung zu der dem Antriebszahnrad zugeordneten Zahnstange gezogen werden. Dadurch werden der Träger und das Antriebszahnrad relativ zu der Zahnstange selbsttätig linear zugestellt.

Eine weitere Werkzeugmaschine mit einer Portalanordnung wird von der Firma TRUMPF (Adresse: Johann-Maus-Str. 2, 71254 Ditzingen, Deutschland) unter der Bezeichnung "TruLaser® 5030" angeboten. Bei der Maschine des Typs "TruLaser® 5030" handelt es sich um eine Laser-Flachbettmaschine für die Blechbearbeitung, an welcher ein Maschinenportal mittels eines Gantry-Antriebs längs eines Maschinengestells in einer Vorschubrichtung quer zu der Längsrichtung eines Portalträgers des Maschinenportals bewegt wird. Ein für die Blechbearbeitung genutzter Laserschneidkopf ist längs des Portalträgers des Maschinenportals verfahrbar. An jedem seiner Längsenden ist der Portalträger auf einem mit einem Vorschubmotor des Gantry-Antriebs versehenen Führungsschlitten gelagert. Die Führungsschlitten sind an maschinengestellfesten Führungsschienen in der Vorschubrichtung des Maschinenportals geführt. Jeder der Vorschubmotoren besitzt eine Motorwelle, auf der als Antriebsrad ein Antriebsritzel aufsitzt. Das Antriebsritzel wird mittels des jeweiligen Vorschubmotors um eine Ritzelachse angetrieben, die senkrecht zu einer von der Längsrichtung des Portalträgers und der Vorschubrichtung des Maschinenportals aufgespannten Bewegungsebene verläuft. Senkrecht zu der Ritzelachse greift jedes der Antriebsritzel der Vorschubmotoren mit einer Ritzelverzahnung in eine Gegenverzahnung einer als Antriebsstange vorgesehenen maschinengestellfesten Zahnstange ein, die parallel zu den mit den Führungsschlitten des Maschinenportals zusammenwirkenden Führungsschienen in der Vorschubrichtung des Maschinenportals verläuft.

Bei der Montage des Maschinenportals an dem Maschinengestell und beispielsweise auch aufgrund von Verschleiß, der an den Antriebsritzeln und den diesen zugeordneten Zahnstangen betriebsbedingt auftritt, sind die miteinander zusammenwirkenden Antriebsritzel und Zahnstangen senkrecht zu der jeweiligen Ritzelachse relativ zueinander zu justieren. Zu diesem Zweck wird im Falle des Standes der Technik zunächst eine Verschraubung des betreffenden Vorschubmotors mit dem den Vorschubmotor lagernden Führungsschlitten gelöst. Anschließend wird der Vorschubmotor gemeinsam mit der Motorwelle und dem auf dieser aufsitzenden Antriebsritzel senkrecht zu der Ritzelachse in die gewünschte Position gegenüber der dem Antriebsritzel zugeordneten Zahnstange verschoben. Abschließend wird die Schraubverbindung zwischen dem Vorschubmotor und dem diesen lagernden Führungsschlitten wieder hergestellt.

Ausgehend von dem gattungsgemäßen Stand der Technik liegt der vorliegenden Erfindung die Aufgabe zugrunde, an einer gattungsgemäßen Portalanordnung eine einfache und gleichwohl funktionssichere Einstellung eines Antriebsrads eines Antriebs der Portalanordnung gegenüber einer zugeordneten Antriebsstange zu ermöglichen.

Erfindungsgemäß gelöst wird diese Aufgabe durch die Portalanordnung nach Patentanspruch 1 und durch die Werkzeugmaschine nach Patentanspruch 11.

Ein durch einen Antriebsmotor um eine Radachse angetriebenes Antriebsrad der für die erfindungsgemäße Portalanordnung vorgesehenen Antriebsvorrichtung ist an einem beispielsweise plattenartigen Antriebsradträger montiert. Der Antriebsradträger ist an einer portalträgerseitigen Führungseinheit einer Führungsvorrichtung angebracht, mittels derer der Portalträger bei Bewegungen in einer Portalbewegungsrichtung geführt ist. Die Portalbewegungsrichtung verläuft senkrecht zu der Längsrichtung des Portalträgers. Die Radachse des Antriebsrads kann senkrecht zu einer Ebene ausgerichtet sein, die von der Längsachse des Portalträgers und von der Portalbewegungsrichtung aufgespannt wird. Senkrecht zu der Radachse ist das Antriebsrad an dem Antriebsradträger abgestützt. Die portalträgerseitige Führungseinheit ist an einer ebenso wie die Antriebsstange der Antriebsvorrichtung ortsfesten Führungseinheit der Führungsvorrichtung in der Portalbewegungsrichtung geführt und somit senkrecht zu der Portalbewegungsrichtung und auch senkrecht zu der Radachse des Antriebsrads und senkrecht zu der Antriebsstange im Wesentlichen spielfrei an der ortsfesten Führungseinheit gelagert.

Die Lagerung des Antriebsradträgers an der portalträgerseitigen Führungseinheit der Führungsvorrichtung ist derart gestaltet, dass der Antriebsradträger mittels einer Exzenter-Stellvorrichtung gemeinschaftlich mit dem Antriebsrad der Antriebsvorrichtung senkrecht zu der Radachse des Antriebsrads relativ zu der portalträgerseitigen Führungseinheit zugestellt werden kann. Mit der Zustellbewegung des Antriebsradträgers relativ zu der portalträgerseitigen Führungseinheit geht eine Justage des an dem Antriebsradträger vorgesehenen Antriebsrads gegenüber der zugeordneten ortsfesten Antriebsstange einher, welche dem Antriebsrad senkrecht zu der Radachse benachbart ist. Bei dieser Zustellbewegung kann die ortsfeste Führungseinheit, welche die mit dem Antriebsradträger versehene portalträgerseitige Führungseinheit der Führungsvorrichtung senkrecht zu der Radachse des Antriebsrads im Wesentlichen spielfrei lagert, als Widerlager für die portalträgerseitige Führungseinheit fungieren.

Die erfindungsgemäße Exzenter-Stellvorrichtung bietet eine funktionssichere Möglichkeit zur feinfühligen Positionierung des Antriebsrads gegenüber der Antriebsstange der Antriebsvorrichtung senkrecht zu der Radachse des Antriebsrads. Stellelemente der Exzenter-Stellvorrichtung in Form eines Stellzapfens und einer Stellzapfenaufnahme sind einerseits an dem mit dem Antriebsrad versehenen Antriebsradträger und andererseits an der den Antriebsradträger lagernden portalträgerseitigen Führungseinheit vorgesehen. Durch eine einfache Drehbetätigung des Stellzapfens lässt sich der Antriebsradträger gemeinschaftlich mit dem Antriebsrad in Querrichtung der Radachse des Antriebsrads relativ zu der portalträgerseitigen Führungseinheit und auch relativ zu der dem Antriebsrad zugeordneten Antriebsstange zustellen.

Erfindungsgemäß führt der Antriebsradträger zur Positionierung des Antriebsrads gegenüber der zugeordneten Antriebsstange eine Schwenkbewegung relativ zu der portalträgerseitigen Führungseinheit aus. Eine Schwenkbewegung zur gegenseitigen Justage von Antriebsrad und Antriebsstange ist insbesondere insofern von Vorteil, als sie sich mittels einer einzigen Stellvorrichtung und somit auf konstruktiv einfache und platzsparende Art und Weise realisieren lässt.

Der mit dem Antriebsrad versehene Antriebsradträger ist an der portalträgerseitigen Führungseinheit zum einen über ein Schwenklager, welches eine Schwenkbewegung des Antriebsradträgers relativ zu der portalträgerseitigen Führungseinheit erlaubt und zum andern über die Stellelemente der Exzenter-Stellvorrichtung senkrecht zu der Radachse abgestützt. Über das Schwenklager und über die Stellelemente der Exzenter-Stellvorrichtung können folglich Kräfte in die portalträgerseitige Führungseinheit und über diese in die zugeordnete ortsfeste Führungseinheit der Führungseinrichtung der Portalanordnung abgetragen werden, die beispielsweise betriebsbedingt zwischen dem Antriebsrad und der Antriebsstange senkrecht zu der Radachse wirken. Damit für die Abstützung des Antriebsradträgers und somit auch des Antriebsrads eine möglichst breite Basis zur Verfügung steht, empfiehlt es sich, den in der Portalbewegungsrichtung bestehenden Abstand der Punkte der Abstützung des Antriebsradträgers an der portalträgerseitigen Führungseinheit, also den in der Portalbewegungsrichtung bestehenden Abstand des zwischen dem Antriebsradträger und der portalträgerseitigen Führungseinheit vorgesehenen Schwenklagers einerseits und des Stellzapfens und der Stellzapfenaufnahme der Exzenter-Stellvorrichtung andererseits möglichst groß zu wählen. Vor diesem Hintergrund ist im Falle der Erfindung eine portalträgerseitige Führungseinheit vorgesehen, die zwei in der Portalbewegungsrichtung gegeneinander versetzte portalträgerseitige Führungselemente aufweist, wobei der Antriebsradträger an dem einen der portalträgerseitigen Führungselemente um die Schwenkachse schwenkbar gelagert ist und wobei die Exzenter-Stellvorrichtung an dem anderen der portalträgerseitigen Führungselemente vorgesehen ist.

Mit der Exzenter-Stellvorrichtung der erfindungsgemäßen Portalanordnung steht ein Hilfsmittel zur Verfügung, welches die Justage des Antriebsrads gegenüber der Antriebsstange der Antriebsvorrichtung senkrecht zu der Radachse verglichen mit der rein manuellen Justage im Falle des vorstehend beschriebenen Standes der Technik wesentlich vereinfacht. Insbesondere ermöglicht die erfindungsgemäße Exzenter-Stellvorrichtung eine reproduzierbare und von dem handwerklichen Geschick des mit der Justage betrauten Personals unabhängige gegenseitige Positionierung des Antriebsrads und der Antriebsstange der Antriebsvorrichtung senkrecht zu der Radachse. Da die Exzenter-Stellvorrichtung erfindungsgemäß gesteuert betätigbar ist, kann mittels der Exzenter-Stellvorrichtung eine auf die Bedürfnisse des jeweiligen Anwendungsfalls abgestimmte Justage des Antriebsrads relativ zu der Antriebsstange vorgenommen werden. Die Steuerung der Stellvorrichtung kann beispielsweise in Abhängigkeit von einem zur Verstellung des Antriebsrads aufzubringenden Drehmoment erfolgen.

Besondere Ausführungsarten der Portalanordnung gemäß Patentanspruch 1 und der Werkzeugmaschine gemäß Patentanspruch 11 ergeben sich aus den abhängigen Patentansprüchen 2 bis 10.

Ausweislich der Patentansprüche 2 und 3 kann in Weiterbildung der Erfindung die zur Einstellung des Antriebsrads gegenüber der Antriebsstange vorgesehene Stellvorrichtung manuell und/oder motorisch betätigbar sein. Zur motorischen Betätigung der Stellvorrichtung wird eine Kolben-Zylinder-Einheit, beispielsweise eine pneumatische Kolben-Zylinder-Einheit, bevorzugt.

Im Falle der Erfindungsbauart nach Patentanspruch 4 sind das Antriebsrad und die Antriebsstange der Antriebsvorrichtung einerseits und die portalträgerseitige Führungseinheit und die ortsfeste Führungseinheit der Führungsvorrichtung andererseits längs der Radachse gegeneinander versetzt. Aufgrund des gegenseitigen Versatzes längs der Radachse können das Antriebsrad und die Antriebsstange einerseits und die portalträgerseitige Führungseinheit und die ortsfeste Führungseinheit andererseits senkrecht zu der Radachse eng beieinander liegen, insbesondere mit gegenseitiger Überdeckung senkrecht zu der Radachse angeordnet werden. Infolgedessen ist die Paarung Antriebsrad/Antriebsstange unempfindlich gegenüber einer thermischen Ausdehnung an der portalträgerseitigen und der ortsfesten Führungseinheit.

Erfindungsgemäß kann die Stellvorrichtung, mittels derer der mit dem Antriebsrad versehene Antriebsradträger und die portalträgerseitige Führungseinheit der Portalanordnung relativ zueinander senkrecht zu der Radachse zugestellt werden, selbsthemmend sein und folglich ein unerwünschtes Verstellen des Antriebsrads nach einer mittels der Stellvorrichtung bewirkten Einstellung selbsttätig verhindern. Gemäß Patentanspruch 5 bevorzugt wird im Falle der Erfindung eine Sicherungsvorrichtung, mittels derer der senkrecht zu der Radachse des Antriebsrads der Antriebsvorrichtung relativ zu der portalträgerseitigen Führungseinheit zugestellte Antriebsradträger an der portalträgerseitigen Führungseinheit fixierbar ist. Als Sicherungsvorrichtung in Frage kommt beispielsweise eine Schraubverbindung zwischen dem Antriebsradträger und der portalträgerseitigen Führungseinheit, die während der Justage des Antriebsrads gegenüber der Antriebsstange gelöst ist und die nach der Justage hergestellt wird.

In weiterer bevorzugter Ausgestaltung der Erfindung ist ausweislich Patentanspruch 6 vorgesehen, dass nicht nur das Antriebsrad sondern auch der Antriebsmotor der Antriebsvorrichtung der erfindungsgemäßen Portalanordnung an dem Antriebsradträger angebracht ist. Dabei besteht insbesondere die Möglichkeit, dass das Antriebsrad unmittelbar auf einer Motorwelle des Antriebsmotors aufsitzt und dementsprechend getriebelos durch den Antriebsmotor um die Radachse angetrieben wird. Beispielsweise eine leistungsmäßige Anpassung der Antriebsvorrichtung an wechselnde Gegebenheiten, etwa an wechselnde Massen des zu bewegenden Portalträgers, kann auf einfache Art und Weise dadurch erfolgen, dass ein an dem Antriebsradträger montierter Antriebsmotor gegen einen anderen Antriebsmotor ausgetauscht wird.

Auch für das Antriebsrad und die Antriebsstange der erfindungsgemäßen Antriebsvorrichtung kommen unterschiedliche Bauarten in Frage. Denkbar sind beispielsweise ein Antriebsrad und eine Antriebsstange, die durch Reibschluss miteinander zusammenwirken.

Aufgrund ihrer besonderen Relevanz für die betriebliche Praxis wird erfindungsgemäß eine Portalanordnung bevorzugt, deren Antriebsvorrichtung als Antriebsrad ein Antriebszahnrad und als Antriebsstange eine Zahnstange aufweist, wobei das Antriebszahnrad mit einer Außenverzahnung senkrecht zu seiner Radachse in eine Gegenverzahnung der Zahnstange eingreift (Patentanspruch 7). Durch Verstellen des Antriebsradträgers gegenüber der portalträgerseitigen Führungseinheit kann die senkrecht zu der Radachse bestehende Überdeckung der Außenverzahnung des Antriebszahnrads und der Gegenverzahnung der Zahnstange (Eingriffstiefe des Antriebszahnrads) bei Bedarf eingestellt werden.

Patentanspruch 8 betrifft eine Erfindungsbauart, im Falle derer der Portalträger der Portalanordnung an dem Antriebsradträger gelagert ist. Die Lagerung des Portalträgers an dem Antriebsradträger ist dabei in Längsrichtung des Portalträgers spielbehaftet. Aufgrund dieses Spiels kann sich die Länge des Portalträgers beispielsweise temperaturbedingt ändern, ohne dass hierdurch die Justage des an dem Antriebsradträger vorgesehenen Antriebsrads gegenüber der zugeordneten Antriebsstange in Mitleidenschaft gezogen würde. Eine Möglichkeit zur spielbehafteten Lagerung eines Portalträgers ist zum Beispiel in EP 2 666 583 A1 im Detail beschrieben.

Gemäß Patentanspruch 9 ist in weiterer Ausgestaltung der Erfindung vorgesehen, dass der Portalträger an einer von der portalträgerseitigen Führungseinheit abliegenden Seite des Antriebsradträgers angeordnet und über den Antriebsradträger an der portalträgerseitigen Führungseinheit abgestützt ist und dass der Portalträger in der Richtung seiner Abstützung und/oder in Gegenrichtung relativ zu der portalträgerseitigen Führungseinheit zustellbar ist. An derartigen Portalanordnungen besteht die Möglichkeit, den Portalträger senkrecht zu derjenigen Ebene zu justieren, die von der Längsrichtung des Portalträgers und der Portalbewegungsrichtung aufgespannt wird. Eine solche Justage erfolgt beispielsweise zur Höheneinstellung des Portalträgers und/oder zur Ausrichtung des Portalträgers gegenüber der genannten Ebene, insbesondere zur horizontalen Ausrichtung des Portalträgers. Dabei kann der Portalträger relativ zu dem Antriebsradträger und/oder der Antriebsradträger relativ zu der portalträgerseitigen Führungseinheit verstellbar sein. Eine einfache Möglichkeit, den Antriebsradträger relativ zu der portalträgerseitigen Führungseinheit zu positionieren, bieten Distanzbleche, die zwischen den Antriebsradträger einerseits und die portalträgerseitige Führungseinheit andererseits eingelegt werden. Die portalträgerseitige Führungseinheit ihrerseits ist an der ihr zugeordneten ortsfesten Führungseinheit und diese üblicherweise an einer Tragstruktur, beispielsweise an einem Maschinengestell der mit der Portalanordnung versehenen Maschine, abgestützt.

Im Falle der Erfindungsbauart gemäß Patentanspruch 10 ist das erfindungsgemäße Konzept zur gegenseitigen Justage des Antriebsrads und der Antriebsstange einer Antriebsvorrichtung für einen Portalträger im Falle einer Portalanordnung mit einem Gantry-Antrieb realisiert.

Nachfolgend wird die Erfindung anhand beispielhafter schematischer Darstellungen näher erläutert.

Es zeigen:
- Figur 1a: eine Laser-Schneidmaschine mit einem Maschinengestell und einer Portalanordnung,
- Figur 1b: eine Explosionsdarstellung der Laser-Schneidmaschine gemäß Figur 1a,
- Figur 2: die Laser-Schneidmaschine gemäß Figur 1a in der senkrechten Draufsicht,
- Figur 3: das Detail III von Figur 1b in der senkrechten stirnseitigen Draufsicht und
- Figur 4: das Detail IV von Figur 2 in vergrößerter Darstellung.

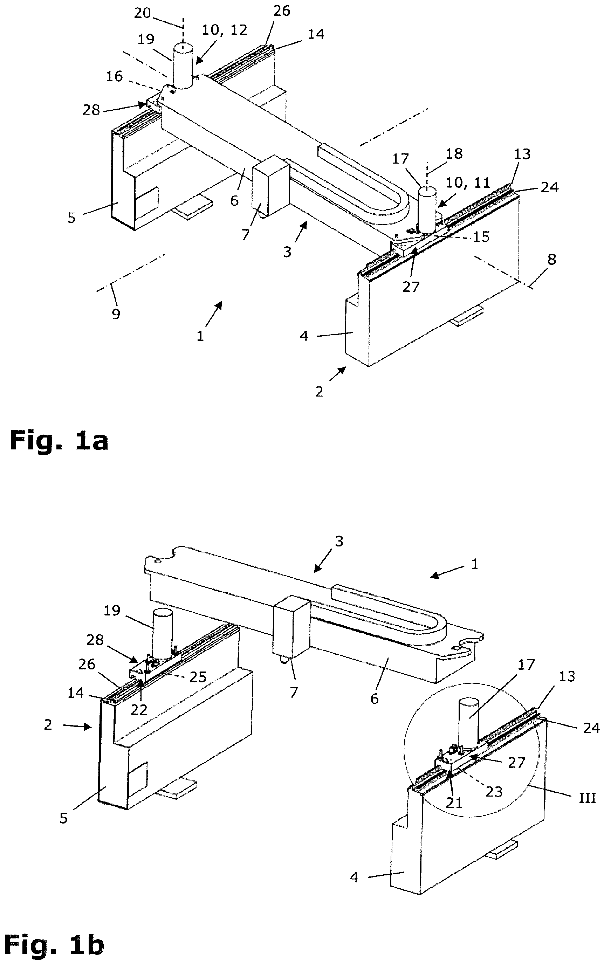

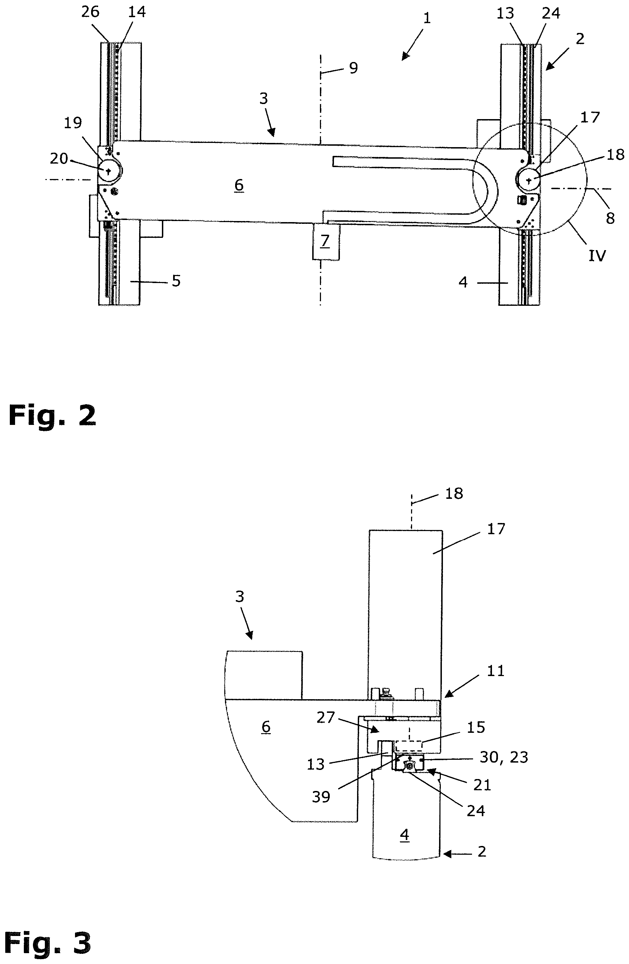

Gemäß den Figuren 1a, 1b und 2 weist eine als Laser-Schneidmaschine 1 ausgeführte Werkzeugmaschine ein Maschinengestell 2 sowie eine Portalanordnung 3 auf. Das Maschinengestell 2 umfasst einen ersten Seiten-Längsträger 4 und einen von diesem unter Ausbildung eines Zwischenraums beabstandeten zweiten Seiten-Längsträger 5.

Der Zwischenraum zwischen dem ersten Seiten-Längsträger 4 und dem zweiten Seiten-Längsträger 5 des Maschinengestells 2 wird von einem Portalträger 6 der Portalanordnung 3 überbrückt. An dem Portalträger 6 ist eine Funktionseinheit der Laser-Schneidmaschine 1, im dargestellten Beispielsfall ein Laser-Schneidkopf 7, in einer durch eine strichpunktierte Linie 8 veranschaulichten Längsrichtung des Portalträgers 6 verfahrbar geführt. Gemeinschaftlich mit dem Laser-Schneidkopf 7 ist der Portalträger 6 in einer durch eine strichpunktierte Linie 9 angedeuteten Portalbewegungsrichtung 9 verfahrbar. Aufgrund der sich damit ergebenden Beweglichkeit kann der Laser-Schneidkopf 7 bei Betrieb der Laser-Schneidmaschine 1 jeden Punkt einer dann in dem Zwischenraum zwischen dem ersten Seiten-Längsträger 4 und dem zweiten Seiten-Längsträger 5 des Maschinengestells 2 angeordneten horizontalen Werkstückauflage bzw. eines auf der Werkstückauflage gelagerten Blechs zur Bearbeitung anfahren. Alle wesentlichen Funktionen der Laser-Schneidmaschine 1 sind numerisch gesteuert.

Die Bewegungen des Portalträgers 6 in der Portalbewegungsrichtung 9 werden mittels eines Gantry-Antriebs 10 erzeugt. Der Gantry-Antrieb 10 umfasst eine erste Antriebsvorrichtung 11 an dem zu dem ersten Seiten-Längsträger 4 des Maschinengestells 2 hin weisenden Seite des Portalträgers 6 sowie eine zweite Antriebsvorrichtung 12 an dem gegenüberliegenden Längsende des Portalträgers 6.

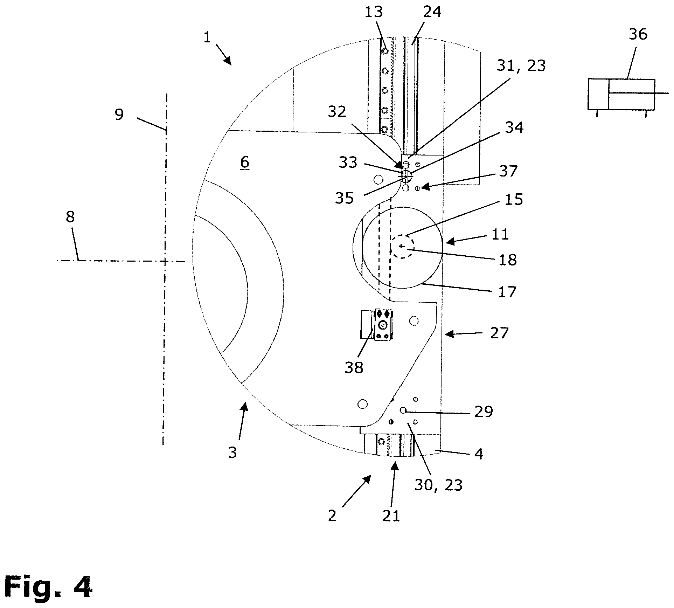

Sowohl bei der ersten Antriebsvorrichtung 11 als auch bei der zweiten Antriebsvorrichtung 12 handelt es sich um einen Zahnstangenantrieb. Als Antriebsstange umfasst die erste Antriebsvorrichtung 11 eine an dem ersten Seiten-Längsträger 4 des Maschinengestells 2 montierte Zahnstange 13, die zweite Antriebsvorrichtung 12 eine an dem zweiten Seiten-Längsträger 5 fixierte Zahnstange 14. Mit der Zahnstange 13 der ersten Antriebsvorrichtung 11 kämmt ein in den Figuren 1a, 1b und 2 verdecktes und in Figur 4 andeutungsweise erkennbares und als Antriebszahnrad 15 ausgeführtes Antriebsrad. In entsprechender Weise ist der Zahnstange 14 der zweiten Antriebsvorrichtung 12 als Antriebsrad ein in den Figuren 1a, 1b und 2 verdecktes Antriebszahnrad 16 zugeordnet.

Das Antriebszahnrad 15 der ersten Antriebsvorrichtung 11 wird durch einen in seiner Drehrichtung umkehrbaren elektrischen Antriebsmotor 17 um eine Radachse 18 angetrieben, die mit der Achse einer nicht dargestellten Motorwelle des Antriebsmotors 17 zusammenfällt, auf welcher das Antriebszahnrad 15 aufsitzt. Ein mit dem Antriebsmotor 17 der ersten Antriebsvorrichtung 11 baugleicher Antriebsmotor 19 der zweiten Antriebsvorrichtung 12 treibt das auf einer Motorwelle des Antriebsmotors 19 aufsitzende Antriebszahnrad 16 um eine Radachse 20 an. Die Radachsen 18, 20 der Antriebszahnräder 15, 16 verlaufen senkrecht zu einer von der Längsrichtung 8 des Portalträgers 6 und der Portalbewegungsrichtung 9 aufgespannten Ebene.

Bei den durch die erste Antriebsvorrichtung 11 und die zweite Antriebsvorrichtung 12 erzeugten Bewegungen in der Portalbewegungsrichtung 9 ist der Portalträger 6 an dem ersten Seiten-Längsträger 4 des Maschinengestells 2 mittels einer ersten Führungsvorrichtung 21 und an dem zweiten Seiten-Längsträger 5 des Maschinengestells 2 mittels einer zweiten Führungsvorrichtung 22 geführt.

Die erste Führungsvorrichtung 21 umfasst eine portalträgerseitige Führungseinheit 23, die in der Portalbewegungsrichtung 9 an einer mit dem ersten Seiten-Längsträger 4 verbundenen und somit als ortsfeste Führungseinheit dienenden Führungsschiene 24 geführt ist. Einer portalträgerseitigen Führungseinheit 25 der zweiten Führungsvorrichtung 22 ist als ortsfeste Führungseinheit eine an dem zweiten Seiten-Längsträger 5 des Maschinengestells 2 befestigte Führungsschiene 26 zugeordnet.

In den Figuren 1a und 1b sind die portalträgerseitigen Führungseinheiten 23, 25 der ersten Führungsvorrichtung 21 und der zweiten Führungsvorrichtung 22 verdeckt angeordnet. Die portalträgerseitige Führungseinheit 23 der ersten Führungsvorrichtung 21 ist im Einzelnen in Figur 3 zu erkennen. Entsprechend ist die portalträgerseitige Führungseinheit 25 an dem gegenüberliegenden Längsende des Portalträgers 6 ausgeführt.

Gemäß Figur 3 ist an der portalträgerseitigen Führungseinheit 23 der ersten Führungsvorrichtung 21 ein auch in den Figuren 1a, 1b erkennbarer Antriebsradträger 27 angebracht. An dem Antriebsradträger 27 ist das Antriebszahnrad 15 der ersten Antriebsvorrichtung 11 um die Radachse 18 drehbar gelagert. In Querrichtung der Radachse 18 ist dem Antriebszahnrad 15 die diesem zugeordnete Zahnstange 13 benachbart. Eine Außenverzahnung des Antriebszahnrads 15, im dargestellten Beispielsfall eine Außen-Schrägverzahnung, greift senkrecht zu der Radachse 18 mit einer Eingriffstiefe in eine vorliegend ebenfalls als Schrägverzahnung ausgebildete Gegenverzahnung der Zahnstange 13 ein.

Ausweislich Figur 3 ist das Antriebszahnrad 15 der ersten Antriebsvorrichtung 11 unmittelbar oberhalb der portalträgerseitigen Führungseinheit 23 und der Führungsschiene 24 der ersten Führungsvorrichtung 21 angeordnet. Die Zahnstange 13 ist dementsprechend mit geringem Abstand von der Führungsschiene 24 montiert. Infolgedessen ist die Paarung Zahnstange 13/Antriebszahnrad 15 unempfindlich gegenüber einer thermischen Ausdehnung an der ersten Führungsvorrichtung 21.

Der Antriebsmotor 17 der ersten Antriebsvorrichtung 11 ist mit dem Antriebsradträger 27 verschraubt. Die nicht dargestellte Motorwelle des Antriebsmotors 17 durchsetzt den Antriebsradträger 27. Das auf der Motorwelle aufsitzende Antriebszahnrad 15 ist im Innern des Antriebsradträgers 27 in einer hierfür vorgesehenen Ausnehmung angeordnet.

Entsprechend Figur 3 stellen sich die konstruktiven Verhältnisse an dem gegenüberliegenden Längsende des Portalträgers 6 im Bereich der zweiten Antriebsvorrichtung 12 und der zweiten Führungsvorrichtung 22 dar. Ein den Antriebsmotor 19 und das Antriebszahnrad 16 der zweiten Antriebsvorrichtung 12 lagernder Antriebsradträger 28 ist in den Figuren 1a und 1b zu erkennen.

Bei der Montage der Portalanordnung 3 an dem Maschinengestell 2 und beispielsweise auch aufgrund von Verschleißerscheinungen, die an der ersten Antriebsvorrichtung 11 und der zweiten Antriebsvorrichtung 12 betriebsbedingt auftreten, sind das Antriebszahnrad 15 und die zugeordnete Zahnstange 13 senkrecht zu der Radachse 18 und das Antriebszahnrad 16 und die Zahnstange 14 senkrecht zu der Radachse 20 relativ zueinander zu justieren. Die konstruktiven Mittel, die an der Laser-Schneidmaschine 1 bzw. der Portalanordnung 3 zu diesem Zweck vorgesehen sind, zeigt Figur 4 für die erste Antriebsvorrichtung 11. Die zweite Antriebsvorrichtung 12 ist auch insoweit mit der ersten Antriebsvorrichtung 11 baugleich.

Gemäß Figur 4 ist der Antriebsradträger 27 um eine parallel zu der Radachse 18 des Antriebszahnrads 15 verlaufende Schwenkachse 29 schwenkbar an einem als Führungselement der portalträgerseitigen Führungseinheit 23 vorgesehenen Führungsschlitten 30 gelagert. Ein weiteres Führungselement der portalträgerseitigen Führungseinheit 23, nämlich ein Führungsschlitten 31, ist gegenüber dem Führungsschlitten 30 in der Portalbewegungsrichtung 9 versetzt und mit einer als Exzenter-Stellvorrichtung ausgeführten Stellvorrichtung 32 versehen. Die Stellvorrichtung 32 umfasst als Stellelemente einen zylindrischen Stellzapfen 33 sowie eine gleichfalls zylindrische Stellzapfenaufnahme 34. Der Stellzapfen 33 ist an dem Führungsschlitten 31 der portalträgerseitigen Führungseinheit 23 um eine parallel zu der Radachse 18 des Antriebszahnrads 15 verlaufende und mit der geometrischen Achse des Stellzapfens 33 zusammenfallende Stellachse 35 drehbar gelagert. Die Stellzapfenaufnahme 34 ist an dem Antriebsradträger 27 vorgesehen, wobei die Achse der zylindrischen Stellzapfenaufnahme 34 gegenüber der Stellachse 35 des Stellzapfens 33 seitlich versetzt ist.

In Folge des gegenseitigen Versatzes der Stellachse 35 und der Achse der Stellzapfenaufnahme 34 führt eine Drehbetätigung des in die Stellzapfenaufnahme 34 eingreifenden und die Wand der Stellzapfenaufnahme 34 beaufschlagenden Stellzapfens 33 zu einer um die Schwenkachse 29 ausgeführten Schwenkbewegung des Antriebsradträgers 27 relativ zu der portalträgerseitigen Führungseinheit 23. Mit der Schwenkbewegung des Antriebsradträgers 27 geht eine Veränderung der Eingriffstiefe der Außenverzahnung des Antriebszahnrads 15 an der Gegenverzahnung der zugeordneten Zahnstange 13 einher.

Die Stellvorrichtung 32 wird manuell betätigt. Zu diesem Zweck dient ein herkömmlicher Drehmomentschlüssel, der an dem Stellzapfen 33 angesetzt wird. Bei einem empirisch ermittelten Grenz-Drehmoment liegt die Solleinstellung des Antriebszahnrads 15 gegenüber der zugeordneten Zahnstange 13 vor. Anstelle einer manuellen Betätigung der Stellvorrichtung 32 ist auch eine Betätigung durch eine in Figur 4 angedeutete und vorzugsweise pneumatische Kolben-Zylinder-Anordnung 36 denkbar.

Ist das Antriebszahnrad 15 gegenüber der Zahnstange 13 senkrecht zu der Radachse 18 in der Solllage justiert, so wird die damit verbundene Schwenkstellung des Antriebsradträgers 27 gegenüber der Führungseinheit 23 mittels einer Sicherungsvorrichtung 37 gesichert. Die Sicherungsvorrichtung 37 umfasst Feststellschrauben, die während der Justage des Antriebszahnrads 15 gelöst sind und mittels derer der Antriebsradträger 27 in der eingestellten Schwenkstellung an dem Führungsschlitten 31 der portalträgerseitigen Führungseinheit 23 fixiert wird.

In Querrichtung der Radachse 18 des Antriebszahnrads 15 wird der Antriebsradträger 27 sowohl über die Schwenkachse 29 als auch über den Stellzapfen 33 der Stellvorrichtung 32 an der portalträgerseitigen Führungseinheit 23 abgestützt. Aufgrund des verhältnismäßig großen Abstandes der Schwenkachse 29 einerseits und des Stellzapfens 33 andererseits besitzt diese Abstützung eine breite Basis. Infolgedessen können zwischen dem Antriebszahnrad 15 und der zugeordneten Zahnstange 13 in Querrichtung der Radachse 18 wirkende Kräfte zuverlässig und ohne eine unerwünschte Dejustage des Antriebszahnrads 15 in die portalträgerseitige Führungseinheit 23 und über diese in die maschinengestellfeste Führungsschiene 24 abgetragen werden.

Soll die erste Antriebsvorrichtung 11 beispielsweise hinsichtlich der zur Verfügung stehenden Antriebsleistung an geänderte Verhältnisse angepasst werden, so kann dies auf einfache Art und Weise durch Austauschen des Antriebsmotors 17 gegen einen Antriebsmotor mit der benötigten Leistung erfolgen.

Neben dem Antriebsmotor 17 ist an dem Antriebsradträger 27 auch der Portalträger 6 der Portalanordnung 3 gelagert. Dabei ist die Lagerung des Portalträgers 6 an dem Antriebsradträger 27 in der Längsrichtung 8 des Portalträgers 6 spielbehaftet. Das Lagerspiel wird durch ein Dreh-Schub-Gelenk 38 bereitgestellt, dessen grundsätzlicher Aufbau und dessen grundsätzliche Funktionsweise in der Druckschrift EP 2 666 583 A1 im Einzelnen beschrieben sind. Das Dreh-Schub-Gelenk 38 lässt insbesondere thermisch bedingte Längenänderungen des Portalträgers 6 zu, ohne dass hierdurch der Antriebsradträger 27 in Längsrichtung 8 des Portalträgers 6 verlagert und dadurch die Justage des Antriebszahnrads 15 der ersten Antriebsvorrichtung 11 gegenüber der zugeordneten maschinengestellfesten Zahnstange 13 in Mitleidenschaft gezogen würde. Bei der Lagerung des Portalträgers 6 an dem Antriebsradträger 28 handelt es sich abweichend von dem Dreh-Schub-Gelenk 38 um ein reines Drehgelenk.

Senkrecht zu der von der Längsrichtung 8 des Portalträgers 6 und der Portalbewegungsrichtung 9 aufgespannten horizontalen Ebene ist der Portalträger 6 über die Antriebsradträger 27, 28 an den portalträgerseitigen Führungseinheiten 23, 25 und über diese und die Führungsschienen 24, 26 an dem ersten Seiten-Längsträger 4 und dem zweiten Seiten-Längsträger 5 des Maschinengestells 2 abgestützt. Die Abstützung des Portalträgers 6 an dem ersten Seiten-Längsträger 4 des Maschinengestells 2 ist im Einzelnen in Figur 3 dargestellt. Die Abstützung des Portalträgers 6 an dem zweiten Seiten-Längsträger 5 des Maschinengestells 2 ist auf entsprechende Art und Weise realisiert.

Zur Gewährleistung eines exakt horizontalen Verlaufs des Portalträgers 6 ist der diesen an seiner Oberseite lagernde Antriebsradträger 27 gegenüber den Führungsschlitten 30, 31 der portalträgerseitigen Führungseinheit 23 in vertikaler Richtung justiert. Zu diesem Zweck ist jeweils ein Distanzblech 39 zwischen jeden der Führungsschlitten 30, 31 einerseits und den Antriebsradträger 27 andererseits eingelegt. Der Führungsschlitten 31 und das zwischen diesem und dem Antriebsradträger 27 angeordnete Distanzblech sind in Figur 3 verdeckt.

## Patentansprüche

1. Portalanordnung einer Werkzeugmaschine (1),
• mit einem Portalträger (6) zur Führung einer Funktionseinheit (7) der Werkzeugmaschine (1) in einer Längsrichtung (8) des Portalträgers (6),
• mit einer Antriebsvorrichtung (11, 12), mittels derer der Portalträger (6) in einer senkrecht zu der Längsrichtung (8) des Portalträgers (6) verlaufenden Portalbewegungsrichtung (9) angetrieben bewegbar ist und die einen Antriebsmotor (17, 19) sowie ein Antriebsrad (15, 16) umfasst, welches mit dem in der Portalbewegungsrichtung (9) angetrieben bewegten Portalträger (6) bewegungsverbunden und mittels des Antriebsmotors (17, 19) um eine Radachse (18, 20) antreibbar ist, die senkrecht zu der Portalbewegungsrichtung (9) verläuft, wobei dem Antriebsrad (15, 16) der Antriebsvorrichtung (11, 12) eine ortsfeste und in der Portalbewegungsrichtung (9) verlaufende Antriebsstange (13, 14) der Antriebsvorrichtung (11, 12) zugeordnet ist, welche dem Antriebsrad (15, 16) senkrecht zu der Radachse (18, 20) benachbart ist und mit welcher das Antriebsrad (15, 16) zur Bewegung des Portalträgers (6) in der Portalbewegungsrichtung (9) zusammenwirkt und wobei das Antriebsrad (15, 16) senkrecht zu der Radachse (18, 20) relativ zu der Antriebsstange (13, 14) zustellbar ist,
• mit einer Führungsvorrichtung (21, 22), mittels derer der in der Portalbewegungsrichtung (9) angetrieben bewegte Portalträger (6) in der Portalbewegungsrichtung (9) geführt ist und die eine portalträgerseitige Führungseinheit (23, 25) umfasst, welche mit dem in der Portalbewegungsrichtung (9) angetrieben bewegten Portalträger (6) bewegungsverbunden ist und welcher eine in der Portalbewegungsrichtung (9) verlaufende ortsfeste Führungseinheit (24, 26) der Führungsvorrichtung (21, 22) zugeordnet ist,
• wobei das Antriebsrad (15, 16) der Antriebsvorrichtung (11, 12) senkrecht zu der Radachse (18, 20) relativ zu der Antriebsstange (13, 14) zustellbar ist, indem das Antriebsrad (15, 16) an einem Antriebsradträger (27, 28) vorgesehen ist, der mit dem in der Portalbewegungsrichtung (9) angetrieben bewegten Portalträger (6) bewegungsverbunden und der an der portalträgerseitigen Führungseinheit (23, 25) der Führungsvorrichtung (21, 22) relativ zu dieser senkrecht zu der Radachse (18, 20) des Antriebsrads (15, 16) zustellbar gelagert ist und
• wobei die portalträgerseitige Führungseinheit (23, 25) der Führungsvorrichtung (21, 22) zwei in der Portalbewegungsrichtung (9) gegeneinander versetzte portalträgerseitige Führungselemente (30, 31) aufweist,
**dadurch gekennzeichnet, dass**
der Antriebsradträger (27, 28) mittels einer gesteuert betätigbaren Stellvorrichtung (32) gemeinschaftlich mit dem Antriebsrad (15, 16) senkrecht zu der Radachse (18, 20) des Antriebsrads (15, 16) relativ zu der portalträgerseitigen Führungseinheit (23, 25) zustellbar ist,
• wobei der Antriebsradträger (27, 28) an dem einen der portalträgerseitigen Führungselemente (30, 31) der portalträgerseitigen Führungseinheit (23, 25) um eine parallel zu der Radachse (18, 20) des Antriebsrads (15, 16) der Antriebsvorrichtung (11, 12) verlaufende Schwenkachse (29) schwenkbar gelagert ist,
• wobei als Stellvorrichtung (32) eine Exzenter-Stellvorrichtung vorgesehen ist, die an dem anderen der portalträgerseitigen Führungselemente (30, 31) der portalträgerseitigen Führungseinheit (23, 25) vorgesehen ist und die Stellelemente in Form eines Stellzapfens (33) und einer Stellzapfenaufnahme (34) aufweist, welche den Stellzapfen (33) aufnimmt und an einer Aufnahmewand abstützt,
• wobei eines der Stellelemente an dem Antriebsradträger (27, 28) und das andere der Stellelemente an dem anderen der portalträgerseitigen Führungselemente (30, 31) vorgesehen ist,
• wobei die Stellvorrichtung (32) betätigbar ist, indem der Stellzapfen (33) mit einer Stellbewegung um eine parallel zu der Radachse (18, 20) des Antriebsrads (15, 16) der Antriebsvorrichtung (11, 12) verlaufende Stellachse (35) unter senkrecht zu der Stellachse (35) wirksamer Beaufschlagung der Aufnahmewand der Stellzapfenaufnahme (34) zustellbar ist und
• wobei aufgrund der Stellbewegung des Stellzapfens (33) der Antriebsradträger (27, 28) gemeinschaftlich mit dem Antriebsrad (15, 16) senkrecht zu der Radachse (18, 20) des Antriebsrads (15, 16) relativ zu der portalträgerseitigen Führungseinheit (23, 25) zustellbar ist, indem der Antriebsradträger (27, 28) mittels der Stellvorrichtung (32) gemeinschaftlich mit dem Antriebsrad (15, 16) um die Schwenkachse (29) schwenkbar ist.

2. Portalanordnung nach Anspruch 1, **dadurch gekennzeichnet, dass** die Stellvorrichtung (32) manuell betätigbar ist.

3. Portalanordnung nach einem der vorhergehenden Ansprüche, **dadurch gekennzeichnet, dass** die Stellvorrichtung (32) motorisch, insbesondere mittels einer Kolben-Zylinder-Einheit (36), betätigbar ist.

4. Portalanordnung nach einem der vorhergehenden Ansprüche, **dadurch gekennzeichnet, dass** das Antriebsrad (15, 16) und die Antriebsstange (13, 14) der Antriebsvorrichtung (11, 12) einerseits und die portalträgerseitige Führungseinheit (23, 25) und die ortsfeste Führungseinheit (24, 26) der Führungsvorrichtung (21, 22) andererseits längs der Radachse (18, 20) gegeneinander versetzt sind.

5. Portalanordnung nach einem der vorhergehenden Ansprüche, **dadurch gekennzeichnet, dass** eine Sicherungsvorrichtung (37) vorgesehen ist, mittels derer der senkrecht zu der Radachse (18, 20) des Antriebsrads (15, 16) der Antriebsvorrichtung (11, 12) relativ zu der portalträgerseitigen Führungseinheit (23, 25) zugestellte Antriebsradträger (27, 28) an dem anderen der portalträgerseitigen Führungselemente (30, 31) der portalträgerseitigen Führungseinheit (23, 25) fixierbar ist.

6. Portalanordnung nach einem der vorhergehenden Ansprüche, **dadurch gekennzeichnet, dass** der Antriebsmotor (17, 19) an dem Antriebsradträger (27, 28) angebracht ist.

7. Portalanordnung nach einem der vorhergehenden Ansprüche, **dadurch gekennzeichnet, dass** die Antriebsvorrichtung (11, 12) als Antriebsrad (15, 16) ein Antriebszahnrad mit einer Außenverzahnung und als Antriebsstange (13, 14) eine Zahnstange mit einer der Außenverzahnung des Antriebszahnrads zugeordneten Gegenverzahnung aufweist und dass das Antriebszahnrad mit der Außenverzahnung senkrecht zu der Radachse (18, 20) des Antriebszahnrads über eine Eingriffstiefe in die Gegenverzahnung der Zahnstange eingreift, wobei die Eingriffstiefe der Außenverzahnung des Antriebszahnrads mittels der Stellvorrichtung (32) einstellbar ist, indem mittels der Stellvorrichtung (32) der Antriebsradträger (27, 28) gemeinschaftlich mit dem Antriebszahnrad senkrecht zu der Radachse (18, 20) des Antriebszahnrads relativ zu der portalträgerseitigen Führungseinheit (23, 25) zustellbar ist.

8. Portalanordnung nach einem der vorhergehenden Ansprüche, **dadurch gekennzeichnet, dass** der Portalträger (6) mit Spiel in der Längsrichtung (8) des Portalträgers (6) an dem Antriebsradträger (27) gelagert ist.

9. Portalanordnung nach einem der vorhergehenden Ansprüche, **dadurch gekennzeichnet, dass** der Portalträger (6) an einer von der portalträgerseitigen Führungseinheit (23, 25) abliegenden Seite des Antriebsradträgers (27, 28) angeordnet und über den Antriebsradträger (27, 28) an der portalträgerseitigen Führungseinheit (23, 25) abgestützt ist und dass der Portalträger (6) in der Richtung seiner Abstützung und/oder in Gegenrichtung relativ zu der portalträgerseitigen Führungseinheit (23, 25) zustellbar ist.

10. Portalanordnung nach einem der vorhergehenden Ansprüche, **dadurch gekennzeichnet, dass** an jedem der beiden Längsenden des Portalträgers (6) eine Antriebsvorrichtung (11, 12) und eine Führungsvorrichtung (21, 22) gemäß dem Oberbegriff von Patentanspruch 1 vorgesehen sind, dass an jedem der Längsenden des Portalträgers (6) das Antriebsrad (15, 16) der betreffenden Antriebsvorrichtung (11, 12) gemäß dem Oberbegriff von Patentanspruch 1 senkrecht zu der Radachse (18, 20) relativ zu der zugeordneten Antriebsstange (13, 14) zustellbar ist, indem das Antriebsrad (15, 16) an einem Antriebsradträger (27, 28) vorgesehen ist, der mit dem in der Portalbewegungsrichtung (9) angetrieben bewegten Portalträger (6) bewegungsverbunden und der an der portalträgerseitigen Führungseinheit (23, 25) der betreffenden Führungsvorrichtung (21, 22) relativ zu dieser senkrecht zu der Radachse (18, 20) des Antriebsrads (15, 16) zustellbar gelagert ist und dass an jedem der beiden Längsenden des Portalträgers (6) die portalträgerseitige Führungseinheit (23, 25) der Führungsvorrichtung (21, 22) gemäß dem Oberbegriff von Patentanspruch 1 zwei in der Portalbewegungsrichtung (9) gegeneinander versetzte portalträgerseitige Führungselemente (30, 31) aufweist und dass an jedem der beiden Längsenden des Portalträgers (6) der Antriebsradträger (27, 28) gemäß dem Kennzeichnungsteil von Patentanspruch 1 mittels einer gesteuert betätigbaren Stellvorrichtung (32) gemeinschaftlich mit dem Antriebsrad (15, 16) senkrecht zu der Radachse (18, 20) des Antriebsrads (15, 16) relativ zu der portalträgerseitigen Führungseinheit (23, 25) zustellbar ist.

11. Werkzeugmaschine zum Bearbeiten von Werkstücken, insbesondere von Blechen, mit einem Maschinengestell (2) und einer Portalanordnung (3) mit einem Portalträger (6), an welchem eine Funktionseinheit (7) der Werkzeugmaschine in einer Längsrichtung (8) des Portalträgers (6) geführt ist, wobei der Portalträger (6) an dem Maschinengestell (2) senkrecht zu der Längsrichtung (8) des Portalträgers (6) in einer Portalbewegungsrichtung (9) angetrieben bewegbar ist, **dadurch gekennzeichnet, dass** als Portalanordnung (3) eine Portalanordnung (3) nach einem der Ansprüche 1 bis 10 vorgesehen ist.

## Claims

1. Portal arrangement of a machine tool (1),
• comprising a portal carrier (6) for guiding a functional unit (7) of the machine tool (1) in a longitudinal direction (8) of the portal carrier (6),
• comprising a drive device (11, 12) by means of which the portal carrier (6) can be driven and thereby moved in a portal movement direction (9) extending perpendicularly to the longitudinal direction (8) of the portal carrier (6) and which comprises a drive motor (17, 19) and a drive wheel (15, 16) that is connected in movement to the portal carrier (6) driven and thereby moved in the portal movement direction (9) and can be driven by means of the drive motor (17, 19) about a wheel axis (18, 20) which extends perpendicularly to the portal movement direction (9), the drive wheel (15, 16) of the drive device (11, 12) being associated with a stationary drive rod (13, 14) of the drive device (11, 12) which extends in the portal movement direction (9), is adjacent to the drive wheel (15, 16) perpendicularly to the wheel axis (18, 20) and with which the drive wheel (15, 16) cooperates to move the portal carrier (6) in the portal movement direction (9), and it being possible to position the drive wheel (15, 16) relative to the drive rod (13, 14) perpendicularly to the wheel axis (18, 20),
• comprising a guide device (21, 22) by means of which the portal carrier (6) driven and thereby moved in the portal movement direction (9) is guided in the portal movement direction (9) and which comprises a portal-carrier-side guide unit (23, 25) which is connected in movement to the portal carrier (6) driven and thereby moved in the portal movement direction (9) and which is associated with a stationary guide unit (24, 26) of the guide device (21, 22) extending in the portal movement direction (9),
• it being possible to position the drive wheel (15, 16) of the drive device (11, 12) relative to the drive rod (13, 14) perpendicularly to the wheel axis (18, 20) in that the drive wheel (15, 16) is provided on a drive wheel carrier (27, 28) which is connected in movement to the portal carrier (6) driven and thereby moved in the portal movement direction (9) and is mounted on the portal-carrier-side guide unit (23, 25) of the guide device (21, 22) such that it can be positioned relative to said unit perpendicularly to the wheel axis (18, 20) of the drive wheel (15, 16), and
• the portal-carrier-side guide unit (23, 25) of the guide device (21, 22) having two portal-carrier-side guide elements (30, 31) which are offset from one another in the portal movement direction (9),
**characterized in that**
the drive wheel carrier (27, 28), together with the drive wheel (15, 16), can be positioned relative to the portal-carrier-side guide unit (23, 25) perpendicularly to the wheel axis (18, 20) of the drive wheel (15, 16) by means of an adjusting device (32) which can be actuated in a controlled manner,
• the drive wheel carrier (27, 28) being mounted on one of the portal-carrier-side guide elements (30, 31) of the portal-carrier-side guide unit (23, 25) so as to be pivotable about a pivot axis (29) extending in parallel with the wheel axis (18, 20) of the drive wheel (15, 16) of the drive device (11, 12),
• an eccentric adjusting device being provided as the adjusting device (32), which eccentric adjusting device is provided on the other of the portal-carrier-side guide elements (30, 31) of the portal-carrier-side guide unit (23, 25) and has adjusting elements in the form of an adjusting pin (33) and an adjusting pin receiving means (34) which receives the adjusting pin (33) and supports it on a wall of the receiving means (34),
• one of the adjusting elements being provided on the drive wheel carrier (27, 28) and the other of the adjusting elements being provided on the other of the portal-carrier-side guide elements (30, 31),
• it being possible to actuate the adjusting device (32) by positioning the adjusting pin (33) by means of an adjusting movement about an adjustment axis (35) extending in parallel with the wheel axis (18, 20) of the drive wheel (15, 16) of the drive device (11, 12), with the adjusting pin (33) acting on the wall of the receiving means (34) perpendicularly to the adjustment axis (35) and
• due to the adjusting movement of the adjusting pin (33), it being possible to position the drive wheel carrier (27, 28), together with the drive wheel (15, 16), relative to the portal-carrier-side guide unit (23, 25) perpendicularly to the wheel axis (18, 20) of the drive wheel (15, 16) by the drive wheel carrier (27, 28) being pivotable together with the drive wheel (15, 16) about the pivot axis (29) by means of the adjusting device (32).

2. Portal arrangement according to claim 1, **characterized in that** the adjusting device (32) can be actuated manually.

3. Portal arrangement according to either of the preceding claims, **characterized in that** the adjusting device (32) can be actuated by a motor, in particular by means of a piston-cylinder unit (36).

4. Portal arrangement according to any of the preceding claims, **characterized in that** the drive wheel (15, 16) and the drive rod (13, 14) of the drive device (11, 12) on the one hand and the portal-carrier-side guide unit (23, 25) and the stationary guide unit (24, 26) of the guide device (21, 22) on the other hand are offset from one another along the wheel axis (18, 20).

5. Portal arrangement according to any of the preceding claims, **characterized in that** a securing device (37) is provided, by means of which the drive wheel carrier (27, 28), which has been positioned relative to the portal-carrier-side guide unit (23, 25) perpendicularly to the wheel axis (18, 20) of the drive wheel (15, 16) of the drive device (11, 12), can be fixed to the other of the portal-carrier-side guide elements (30, 31) of the portal-carrier-side guide unit (23, 25).

6. Portal arrangement according to any of the preceding claims, **characterized in that** the drive motor (17, 19) is attached to the drive wheel carrier (27, 28).

7. Portal arrangement according to any of the preceding claims, **characterized in that** the drive device (11, 12) has a drive gear with an outer toothing as the drive wheel (15, 16) and a toothed rack with a counter-toothing associated with the outer toothing of the drive gear as the drive rod (13, 14), and **in that** the drive gear with the outer toothing engages over an engagement depth in the counter-toothing of the toothed rack perpendicularly to the wheel axis (18, 20) of the drive gear, the engagement depth of the outer toothing of the drive gear being adjustable by means of the adjusting device (32) by the drive wheel carrier (27, 28) being able to be positioned, together with the drive gear, relative to the portal-carrier-side guide unit (23, 25) perpendicularly to the wheel axis (18, 20) of the drive gear by means of the adjusting device (32).

8. Portal arrangement according to any of the preceding claims, **characterized in that** the portal carrier (6) is mounted on the drive wheel carrier (27) with play in the longitudinal direction (8) of the portal carrier (6).

9. Portal arrangement according to any of the preceding claims, **characterized in that** the portal carrier (6) is arranged on a side of the drive wheel carrier (27, 28) remote from the portal-carrier-side guide unit (23, 25) and is supported on the portal-carrier-side guide unit (23, 25) by means of the drive wheel carrier (27, 28), and **in that** the portal carrier (6) can be positioned in the direction of its support and/or in the opposite direction relative to the portal-carrier-side guide unit (23, 25).

10. Portal arrangement according to any of the preceding claims, **characterized in that** a drive device (11, 12) and a guide device (21, 22) according to the preamble of claim 1 are provided at each of the two longitudinal ends of the portal carrier (6), **in that**, at each of the longitudinal ends of the portal carrier (6), the drive wheel (15, 16) of the relevant drive device (11, 12) according the preamble of claim 1 can be advanced relative to the associated drive rod (13, 14) perpendicularly to the wheel axis (18, 20) by the drive wheel (15, 16) being provided on a drive wheel carrier (27, 28) which is connected in movement to the portal carrier (6) driven and thereby moved in the portal movement direction (9) and is mounted on the portal-carrier-side guide unit (23, 25) of the relevant guide device (21, 22) such that it can be positioned relative to said unit perpendicularly to the wheel axis (18, 20) of the drive wheel (15, 16), and **in that**, at each of the two longitudinal ends of the portal carrier (6), the portal-carrier-side guide unit (23, 25) of the guide device (21, 22) according to the preamble of claim 1 has two portal-carrier-side guide elements (30, 31) which are offset from one another in the portal movement direction (9), and **in that**, at each of the two longitudinal ends of the portal carrier (6), the drive wheel carrier (27, 28) according to the characterizing part of claim 1 can be positioned, together with the drive wheel (15, 16), relative to the portal-carrier-side guide unit (23, 25) perpendicularly to the wheel axis (18, 20) of the drive wheel (15, 16) by means of an adjusting device (32) which can be actuated in a controlled manner.

11. Machine tool for machining workpieces, in particular sheet metal, comprising a machine frame (2) and a portal arrangement (3) having a portal carrier (6) on which a functional unit (7) of the machine tool is guided in a longitudinal direction (8) of the portal carrier (6), the portal carrier (6) being able to be driven and thereby moved on the machine frame (2) perpendicularly to the longitudinal direction (8) of the portal carrier (6) in a portal movement direction (9), **characterized in that** a portal arrangement (3) according to any of claims 1 to 10 is provided as the portal arrangement (3).

## Revendications

1. Système de portique d'une machine-outil (1),
• comportant un support de portique (6) pour le guidage d'une unité fonctionnelle (7) de la machine-outil (1) dans une direction longitudinale (8) du support de portique (6),
• comportant un dispositif d'entraînement (11, 12), au moyen duquel le support de portique (6) est déplaçable de manière entraînée dans une direction de déplacement de portique (9) s'étendant perpendiculairement à la direction longitudinale (8) du support de portique (6) et qui comporte un moteur d'entraînement (17, 19) ainsi qu'une roue d'entraînement (15, 16) dont le déplacement est couplé à celui du support de portique (6) déplacé de manière entraînée dans la direction de déplacement de portique (9) et qui peut être entraînée au moyen du moteur d'entraînement (17, 19) autour d'un axe de roue (18, 20) qui s'étend perpendiculairement à la direction de déplacement de portique (9), une tige d'entraînement (13, 14), fixe et s'étendant dans la direction de déplacement de portique (9), du dispositif d'entraînement (11, 12) étant associée à la roue d'entraînement (15, 16) du dispositif d'entraînement (11, 12), laquelle tige est adjacente à la roue d'entraînement (15, 16) perpendiculairement à l'axe de roue (18, 20) et avec laquelle la roue d'entraînement (15, 16) coopère pour le déplacement du support de portique (6) dans la direction de déplacement de portique (9), et la roue d'entraînement (15, 16) étant positionnable par rapport à la tige d'entraînement (13, 14) perpendiculairement à l'axe de roue (18, 20),
• comportant un dispositif de guidage (21, 22), au moyen duquel le support de portique (6) déplacé de manière entraînée dans la direction de déplacement de portique (9) est guidé dans la direction de déplacement de portique (9) et qui comporte une unité de guidage (23, 25) côté support de portique, unité dont le déplacement est couplé à celui du support de portique (6) déplacé de manière entraînée dans la direction de déplacement de portique (9) et à laquelle unité est associée une unité de guidage (24, 26) fixe, s'étendant dans la direction de déplacement de portique (9), du dispositif de guidage (21, 22),
• la roue d'entraînement (15, 16) du dispositif d'entraînement (11, 12) étant positionnable par rapport à la tige d'entraînement (13, 14) perpendiculairement à l'axe de roue (18, 20), par le fait que la roue d'entraînement (15, 16) est prévue sur un support de roue d'entraînement (27, 28) dont le déplacement est couplé à celui du support de portique (6) déplacé de manière entraînée dans la direction de déplacement de portique (9) et qui est monté sur l'unité de guidage (23, 25) côté support de portique du dispositif de guidage (21, 22) de manière positionnable par rapport à celui-ci perpendiculairement à l'axe de roue (18, 20) de la roue d'entraînement (15, 16) et
• l'unité de guidage (23, 25) côté support de portique du dispositif de guidage (21, 22) comprenant deux éléments de guidage (30, 31) côté support de portique décalés l'un par rapport à l'autre dans la direction de déplacement de portique (9),
**caractérisé en ce que**
le support de roue d'entraînement (27, 28) est positionnable par rapport à l'unité de guidage (23, 25) côté support de portique au moyen d'un dispositif de réglage (32) actionnable de manière commandée conjointement avec la roue d'entraînement (15, 16) perpendiculairement à l'axe de roue (18, 20) de la roue d'entraînement (15, 16),
• le support de roue d'entraînement (27, 28) étant monté pivotant sur l'un des éléments de guidage (30, 31) côté support de portique de l'unité de guidage (23, 25) côté support de portique autour d'un axe de pivotement (29) s'étendant parallèlement à l'axe de roue (18, 20) de la roue d'entraînement (15, 16) du dispositif d'entraînement (11, 12),
• un dispositif de réglage à excentrique étant prévu comme dispositif de réglage (32), lequel est prévu sur l'autre des éléments de guidage (30, 31) côté support de portique de l'unité de guidage (23, 25) côté support de portique et comprend les éléments de réglage sous la forme d'un tenon de réglage (33) et d'un logement de tenon de réglage (34) qui loge le tenon de réglage (33) et le supporte sur une paroi de logement,
• l'un des éléments de réglage étant prévu sur le support de roue d'entraînement (27, 28) et l'autre des éléments de réglage étant prévu sur l'autre des éléments de guidage (30, 31) côté support de portique,
• le dispositif de réglage (32) étant actionnable par le fait que le tenon de réglage (33) est positionnable par un déplacement de réglage autour d'un axe de réglage (35) s'étendant parallèlement à l'axe de roue (18, 20) de la roue d'entraînement (15, 16) du dispositif d'entraînement (11, 12) sous l'effet d'une sollicitation, agissant perpendiculairement à l'axe de réglage (35), de la paroi du logement de tenon de réglage (34) et
• du fait du déplacement de réglage du tenon de réglage (33), le support de roue d'entraînement (27, 28) étant positionnable par rapport à l'unité de guidage (23, 25) côté support de portique conjointement avec la roue d'entraînement (15, 16) perpendiculairement à l'axe de roue (18, 20) de la roue d'entraînement (15, 16), par le fait que le support de roue d'entraînement (27, 28) est pivotant autour de l'axe de pivotement (29) au moyen du dispositif de réglage (32) conjointement avec la roue d'entraînement (15, 16).

2. Système de portique selon la revendication 1, **caractérisé en ce que** le dispositif de réglage (32) est actionnable manuellement.

3. Système de portique selon l'une des revendications précédentes, **caractérisé en ce que** le dispositif de réglage (32) est actionnable de manière motorisée, en particulier au moyen d'une unité piston-cylindre (36).

4. Système de portique selon l'une des revendications précédentes, **caractérisé en ce que** la roue d'entraînement (15, 16) et la tige d'entraînement (13, 14) du dispositif d'entraînement (11, 12) d'une part et l'unité de guidage (23, 25) côté support de portique et l'unité de guidage fixe (24, 26) du dispositif de guidage (21, 22) d'autre part sont décalées les unes par rapport aux autres le long de l'axe de roue (18, 20).

5. Système de portique selon l'une des revendications précédentes, **caractérisé en ce qu'**un dispositif de fixation (37) est prévu, au moyen duquel le support de roue d'entraînement (27, 28) positionné par rapport à l'unité de guidage (23, 25) côté support de portique perpendiculairement à l'axe de roue (18, 20) de la roue d'entraînement (15, 16) du dispositif d'entraînement (11, 12) peut être fixé à l'autre des éléments de guidage (30, 31) côté support de portique de l'unité de guidage (23, 25) côté support de portique.

6. Système de portique selon l'une des revendications précédentes, **caractérisé en ce que** le moteur d'entraînement (17, 19) est installé sur le support de roue d'entraînement (27, 28).

7. Système de portique selon l'une des revendications précédentes, **caractérisé en ce que** le dispositif d'entraînement (11, 12) comprend, comme roue d'entraînement (15, 16), une roue dentée d'entraînement dotée d'une denture extérieure et, comme tige d'entraînement (13, 14), une crémaillère dotée d'une denture complémentaire associée à la denture extérieure de la roue dentée d'entraînement, et **en ce que** la roue dentée d'entraînement s'engrène, par la denture extérieure, perpendiculairement à l'axe de roue (18, 20) de la roue dentée d'entraînement sur une profondeur d'engrènement dans la denture complémentaire de la crémaillère, la profondeur d'engrènement de la denture extérieure de la roue dentée d'entraînement étant réglable au moyen du dispositif de réglage (32) par le fait que le support de roue d'entraînement (27, 28) étant positionnable par rapport à l'unité de guidage (23, 25) côté support de portique au moyen du dispositif de réglage (32) conjointement avec la roue dentée d'entraînement perpendiculairement à l'axe de roue (18, 20) de la roue dentée d'entraînement.

8. Système de portique selon l'une des revendications précédentes, **caractérisé en ce que** le support de portique (6) est monté sur le support de roue d'entraînement (27) avec jeu dans la direction longitudinale (8) du support de portique (6).

9. Système de portique selon l'une des revendications précédentes, **caractérisé en ce que** le support de portique (6) est disposé sur un côté du support de roue d'entraînement (27, 28) éloigné de l'unité de guidage (23, 25) côté support de portique et s'appuie sur l'unité de guidage (23, 25) côté support de portique par le biais du support de roue d'entraînement (27, 28), et **en ce que** le support de portique (6) est positionnable par rapport à l'unité de guidage (23, 25) côté support de portique en direction de son appui et/ou en sens inverse.

10. Système de portique selon l'une des revendications précédentes, **caractérisé en ce qu'**à chacune des deux extrémités longitudinales du support de portique (6) sont prévus un dispositif d'entraînement (11, 12) et un dispositif de guidage (21, 22) selon le préambule de la revendication 1, **en ce qu'**à chacune des extrémités longitudinales du support de portique (6), la roue d'entraînement (15, 16) du dispositif d'entraînement concerné (11, 12) selon le préambule de la revendication 1 est positionnable par rapport à la tige d'entraînement associée (13, 14) perpendiculairement à l'axe de roue (18, 20), par le fait que la roue d'entraînement (15, 16) est prévue sur un support de roue d'entraînement (27, 28) dont le déplacement est couplé à celui du support de portique (6) déplacé de manière entraînée dans la direction de déplacement de portique (9) et qui est monté sur l'unité de guidage (23, 25) côté support de portique du dispositif de guidage concerné (21, 22) de manière positionnable par rapport à celui-ci perpendiculairement à l'axe de roue (18, 20) de la roue d'entraînement (15, 16), et **en ce qu'**à chacune des deux extrémités longitudinales du support de portique (6), l'unité de guidage (23, 25) côté support de portique du dispositif de guidage (21, 22) selon le préambule de la revendication 1 comprend deux éléments de guidage (30, 31) côté support de portique décalés l'un par rapport à l'autre dans la direction de déplacement de portique (9), et **en ce qu'**à chacune des deux extrémités longitudinales du support de portique (6), le support de roue d'entraînement (27, 28) selon la partie caractérisante de la revendication 1 est positionnable par rapport à l'unité de guidage (23, 25) côté support de portique au moyen d'un dispositif de réglage (32) actionnable de manière commandée conjointement avec la roue d'entraînement (15, 16) perpendiculairement à l'axe de roue (18, 20) de la roue d'entraînement (15, 16).

11. Machine-outil pour l'usinage de pièces, en particulier de tôles, comportant un bâti de machine (2) et un système de portique (3) comportant un support de portique (6), sur lequel une unité fonctionnelle (7) de la machine-outil est guidée dans une direction longitudinale (8) du support de portique (6), le support de portique (6) étant déplaçable de manière entraînée sur le bâti de machine (2) perpendiculairement à la direction longitudinale (8) du support de portique (6) dans une direction de déplacement de portique (9), **caractérisé en ce que** comme système de portique (3) il est prévu un système de portique (3) selon l'une des revendications 1 à 10.
